# EUROPÄISCHE PATENTANMELDUNG

(11) **EP 4 600 510 A1**
(43) Veröffentlichungstag der Anmeldung: **13.08.2025**
(21) Anmeldenummer: 24156450.9
(22) Anmeldetag: 07.02.2024
(51) Int. Cl.: F16B 9/00, F16B 13/12

(54) **GITTERROSTANORDNUNG MIT GITTERROST UND BEFESTIGUNGSELEMENT**

(71) Anmelder: Noltewerk GmbH & Co. KG, 48268 Greven (DE)
(72) Erfinder: van Üüm, Christoph, 48712 Gescher (DE)
(74) Vertreter: Lenzing Gerber Stute

(57) **Zusammenfassung**

Die Erfindung betrifft eine Gitterrostanordnung aufweisend wenigstens einen Gitterrost (1) mit Stegen (3), wobei die Stege (3) Maschen (2) begrenzen, und wenigstens ein Befestigungselement (4), und wobei das wenigstens eine Befestigungselement (4) in eine Masche (2) einsetzbar ist und sich an einer Innenwandung (20) der Masche (2) derart abstützt, dass das wenigstens eine Befestigungselement (4) in der Masche (2) verklemmt und darin reibschlüssig gehalten ist.

## Beschreibung

Die vorliegende Erfindung betrifft einen Gitterrostanordnung mit den Merkmalen des Oberbegriffs des Anspruchs 1, ein Verfahren zur Verbindung eines Bauelements mit einem Gitterrost sowie eine Verwendung eines Befestigungselementes zur Befestigung von Bauelementen an einem Gitterrost.

Gitterroste werden zur Abdeckung oder Verkleidung und als Laufbeläge unter den verschiedensten Bedingungen eingesetzt. Die jeweilige Anwendung der Gitterroste beeinflusst die Größe der Maschenlöcher und die Stärke der das Gitterrost bildenden Stege.

Gitterroste bestehen aus Metallen, z.B. verzinkter Stahl, Kunststoffen oder einer Hybridverbindung. Feuerverzinkte Gitterroste sind als Pressroste oder Schweißpressroste ausgebildet. Auch bekannt ist es Gitterroste aus faserverstärktem Kunststoff, insbesondere GFK einzusetzen. Bei GFK Gitterrosten unterscheidet man aufgrund der unterschiedlichen Herstellungsweisen grundsätzlich zwischen gegossenen GFK Gitterrosten und pultrudierten GFK Gitterrosten.

In Off-Shore Windanlagen werden GFK Gitterroste auf Grund ihrer Eigenschaften als Laufbeläge oder zur Ausbildung von Wartungsplattformen eingesetzt. Auch Helihoist - Plattformen, die das sichere Absetzen des Servicepersonals mit dem Hubschrauber gewährleisten, werden mittlerweile aus GFK Gitterroste hergestellt.

Gegossene GFK-Gitterroste werden in einer Negativform, in einer sogenannten "Mold" hergestellt. Je nach Ausführung des Gitterrostes, der Gitterrosthöhe, der Maschenteilung und der Stegbreiten wird die entsprechende Form gewählt. Dann werden im Verbund Glasfasern eingewoben. In einer Mischanlage wird eine Harzmischung hergestellt. Diese besteht beispielsweise aus einem Harz, z.B. Isophtal-Harz, Farbpigmenten und Additiven für das Brandverhalten sowie UV-Hemmer. Anschließend wird die Harzmischung in die Form gegeben, und die Glasfasern noch einmal angedrückt und die Form erhitzt. Durch das Erhitzen härtet das Material aus. Wenn der GFK Gitterrost abgekühlt ist, wird er aus der Form gepresst. Um das Auspressen zu ermöglichen, hat die Negativform eine konische Form, so dass die Maschenwandung des resultierenden GFK Gitterrosts ebenfalls konisch ausgeformt ist.

Um Bauelemente, wie beispielsweise Geländer oder Pfosten an einem Gitterrost zu befestigen, wird herkömmlicherweise ein Befestigungselement zwischen die beiden Oberseiten (Laufseite und Unterseite) eines oder mehrerer Stege geklemmt. Insbesondere bei Off-Shore Windanlagen stellt die Befestigung aufgrund der örtlichen Bedingungen eine Herausforderung dar.

Es ist eine Aufgabe der Erfindung ein Gitterrost mit einem Befestigungselement anzugeben, das besonders einfache zu montieren und kostengünstig herzustellen ist.

Diese Aufgabe wird gelöst von einer Gitterrostanordnung mit den Merkmalen des Anspruchs 1, von einem Verfahren zur Verbindung eines Bauelements mit einem Gitterrost mit den Merkmalen des Anspruchs 9 sowie von einer Verwendung eines Befestigungselementes zur Befestigung von Bauelementen an einem Gitterrost mit den Merkmalen des Anspruchs 10.

Demnach ist eine Gitterrostanordnung aufweisend wenigstens einen Gitterrost mit Stegen, die Maschen begrenzen, und wenigstens ein Befestigungselement, vorgesehen. Das wenigstens eine Befestigungselement ist in eine Masche einsetzbar und stützt sich an einer Innenwandung der Masche derart ab, dass das wenigstens eine Befestigungselement in der Masche verklemmt und darin reibschlüssig gehalten ist.

Eine solche Art der Befestigung ist besonders einfach herzustellen und einfach zu montieren. Je nach Gestalt der Masche ist die Innenwandung mittels einer oder mehrerer Wände gebildet. Bei einem rechteckigen Querschnitt der Masche, ist das Befestigungselement bevorzugt zwischen gegenüberliegende Wände geklemmt und dadurch in dem Gitterrost festgehalten.

Das Verklemmen kann beispielsweise mittels Spreizen erfolgen. Dazu weist das wenigstens eine Befestigungselement bevorzugt einen Grundkörper mit einem Spreizbereich aufweist, sowie ein Spreizelement, wobei der Grundkörper im Spreizbereich mittels des Spreizelementes verformbar, insbesondere radial nach außen bewegbar ist, derart, dass im montierten Zustand des wenigstens einen Befestigungselementes der Grundkörper im Spreizbereich gegen die Innenwandung drückt und einen Reibschluss herstellt. Das Spreizelement ist bevorzugt eine Schraube. Es ist aber auch denkbar, dass das Spreizelement ein Stift bzw. Nieten ist.

Der Grundkörper weist im Spreizbereich bevorzugt wenigstens zwei Spreizzungen, bei einem rechteckigen Querschnitt der Masche insbesondere genau vier Spreizzungen auf.

Der Grundkörper weist eine Höhe auf, die bevorzugt kleiner als die Gitterrosthöhe ist. In anderen Worten liegt ein Ende des Befestigungselementes innerhalb der Masche. Das Befestigungselement durchsetzt die Masche somit nicht vollständig.

Der Grundkörper hat vorzugsweise einen Kragen an der in Einsetzrichtung vorderen Stirnseite, der im eingesetzten Zustand auf einer Oberseite der die Masche umgebenden Stege aufliegt, so dass der Grundkörper nicht nach unten durch die Masche durchrutschen kann. Der Kragen kann umlaufend ausgebildet sein. Er kann aber auch Unterbrechungen aufweisen. Es ist auch denkbar, lediglich einzelne Arme zu verwenden.

Bevorzugter Weise weist der Grundkörper einen Einführbereich für das Spreizmittel auf, der in Einsetzrichtung vor dem Spreizbereich liegt. Der Einführbereich kann ein Innengewinde aufweisen, insbesondere dann, wenn das Spreizelement eine Schraube ist. Der Einführbereich kann mittels einer ein Innengewinde tragenden Einführhülse gebildet sein.

In einer vorteilhaften Ausführungsform ist der Grundkörper des wenigstens einen Befestigungselementes im Spritzgussverfahren gebildet. Insbesondere kann eine Einführhülse von der Spritzgussmasse umgeben sein. Der Kragen ist bevorzugt im Spritzgussverfahren mit ausgebildet.

Es ist denkbar, den Grundkörper des Befestigungselementes einstückig oder mehrstückig auszubilden.

Der Gitterrost ist bevorzugt ein GFK Gitterrost. Insbesondere ist das verwendete Harz Orthophalharz, Isophtalharz oder Vinylesterharz. Ein solcher Gitterrost mit den zuvor beschriebenen Befestigungselementen eignete sich besonders zum Einsatz in Off-Shore Windenergieanlagen.

Die Gitterrosthöhe liegt bevorzugt in einem Bereich zwischen 20 mm bis 70 mm. Die die Maschen bildenden Stege weisen bevorzugt eine Stegbreite in einem Bereich von 4 mm bis 12 mm auf. Die Stege können einen rechteckigen Längsschnitt aufweisen oder abgerundet sein. Die Maschen können im Querschnitt rechteckig, insbesondere quadratisch ausgebildet sein. Die Maschenweite, der lichte Abstand zwischen zwei aufeinanderfolgenden Stegen, liegt bevorzugt in einem Bereich von 20 mm bis 80 mm, insbesondere von 20 mm bis 50 mm.

Weiterhin ist ein Verfahren zur Verbindung eines Elements, insbesondere Bauelementes mit einem Gitterrost vorgesehen, wobei der Gitterrost Stege aufweist, die Maschen begrenzen, mit folgenden Verfahrensschritten:
- Einsetzen eines Befestigungselementes in eine Masche des Gitterrostes,
- Platzieren eines zu befestigenden Elementes auf dem Gitterrost, und
- Befestigen des Elementes an dem Befestigungselement mittels eines Befestigungsmittel und dabei
- Einbringen des Befestigungsmittels in das Befestigungselement derart, dass das Befestigungselement innerhalb der Masche verklemmt und eine reibschlüssige Verbindung entsteht.

Diese Art der Verbindung ist besonders einfach und kostengünstig herstellbar. Das Befestigungselement bzw. der Gitterrost kann wie oben beschrieben ausgebildet sein. Das Befestigungsmittel ist bevorzugt eine Schraube. Das Befestigungsmittel kann mittelbar oder unmittelbar das zu befestigende (Bau-)Element an dem Befestigungselement halten. Beispielsweise ist es denkbar, dass ein Geländer oder Pfosten an Profilen befestigt wird/werden, die an dem Gitterrost mittels der Befestigungsmittel gehalten sind. Elemente können neben Bauelementen auch Schilder zur Beschilderung oder sonstige Elemente sein.

Das Einsetzen des Befestigungselementes kann außenseitig bzw. laufseitig (von einer Oberseite des Gitterrostes her) erfolgen. Das stellt einen großen Vorteil bei der Montage dar.

Außerdem ist eine Verwendung eines Befestigungselementes zur Befestigung von (Bau-)Elementen an einem Gitterrost vorgesehen, wobei das Befestigungselement einen Grundkörper und ein Spreizelement aufweist, wobei der Grundkörper einen Spreizbereich hat, der in Zusammenwirkung mit dem Spreizelement dazu ausgelegt ist, eine reibschlüssige Verbindung innerhalb einer Masche eines Gitterrostes herzustellen. Das Befestigungselement sowie das Gitterrost können wie oben beschrieben ausgebildet sein.

Ein einzelnes Befestigungselement kann sich auch über mehrere Maschen erstrecken und jeweils Bereiche entsprechend dem beschriebenen Grundkörper aufweisen, die in jeweils eine Masche eingreifen und einen Reibschluss erwirken.

Eine bevorzugte Ausführungsformen der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines GFK Gitterrosts mit einem Befestigungselement,
- Fig. 2:: eine räumliche Darstellung des GFK Gitterrosts und des Befestigungselements der Figur 1 im montierten Zustand, sowie
- Fig. 3:: eine räumliche Darstellung eines an dem GFK Gitterrost mittels des Befestigungselementes befestigten Bauelementes.

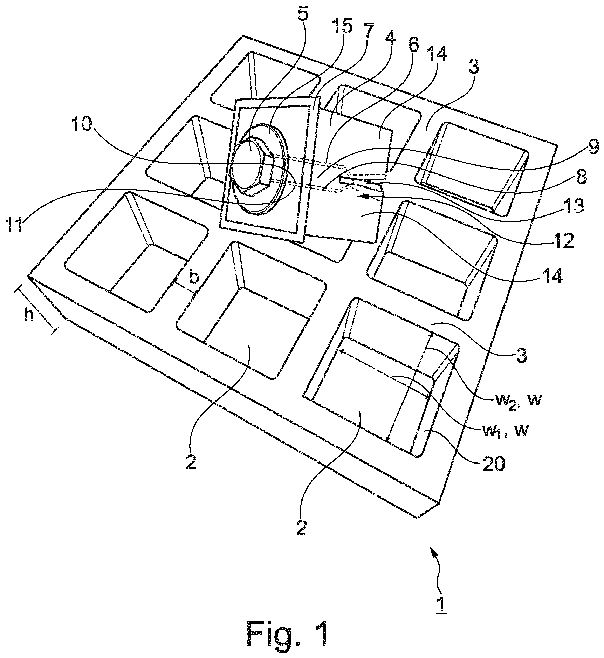

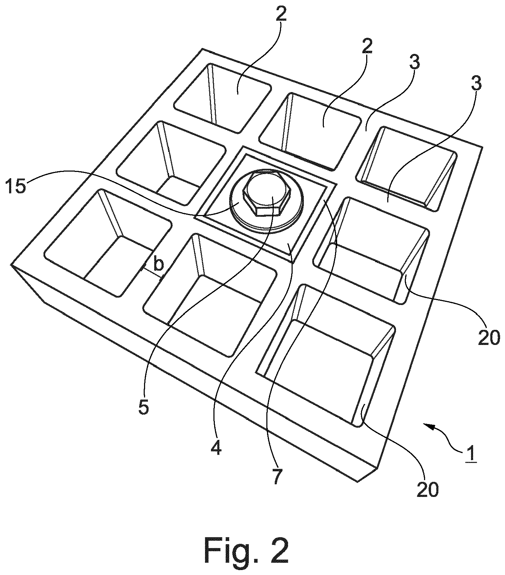

In den Figuren 1 und 2 ist ein Gitterrost 1 aus glasfaserverstärktem Kunststoff (GFK) dargestellt. Die Gitterrosthöhe h liegt in einem Bereich zwischen 20 mm bis 70 mm. Die die Maschen 2 bildenden Stege 3 weisen eine Stegbreite b in einem Bereich von 4 mm bis 12 mm auf. Die Maschen 2 sind im Querschnitt rechteckig, insbesondere quadratisch ausgebildet, d.h. die Stege 3 erstrecken sich einerseits parallel zur Rost-Längsrichtung und andererseits parallel zur Rost-Querrichtung. Die Maschenweite w (w1=w2), der lichte Abstand zwischen zwei aufeinanderfolgenden Stegen, liegt in einem Bereich von 20 mm bis 50 mm. Es ist aber auch denkbar, dass die Maschen 2 eine andere Form, zum Beispiel eine rombenförmige Gestalt aufweisen, bei denen sich die Roststege jeweils schräg zur Rost-Längsrichtung oder Rost-Querrichtung erstrecken. Der dargestellte Gitterrost weist eine gelichförmiges Maschenbild auf. Alle Maschen haben dieselbe Maschenweite.

In den Figuren ist außerdem ein Befestigungselement 4 dargestellt.

Das Befestigungselement 4 dient zur Befestigung von nicht dargestellten Elementen, insbesondere Bauelementen an dem Gitterrost 1. Die Bauelemente, wie beispielsweise Geländer sind laufseitig auf dem Gitterrost platziert und müssen an dem Gitterrost befestigt werden. Dazu wird das Befestigungselement 4 in eine Masche 2 des Gitterrostes 1 eingeführt und mittels eines Spreizelementes 5 in der Masche 2 verspreizt. Durch das Aufspreizen wird das Befestigungselement 4 innerhalb der Masche 2 zwischen der Mascheninnenwandung 20 verklemmt. Die dabei resultierende Haltekraft ist ausreichend groß, so dass sichergestellt werden kann, dass die an dem Befestigungselement 4 befestigten Elemente dauerhaft an dem Gitterrost 1 befestigt sind.

Das Befestigungselement 4 weist in der dargestellten Ausführungsform einen Grundköper 6 auf, dessen Grundform an die Maschenform angepasst ist. Im dargestellten Beispiel weist die Masche 2 im Querschnitt eine quadratische Form auf. Entsprechend ist auch der Grundkörper 6 im Schnitt quadratisch ausgebildet. Da der Maschenquerschnitt aufgrund des Fertigungsverfahren nicht konstant ist, ist die Größe des Grundkörpers 6 an die Lichteweite der Masche 2 angepasst. Damit der Grundkörper 6 beim Einsetzen des Befestigungselements 4 in die Masche 2 nicht nach unten durchfällt, weist der Grundkörper 6 einen umlaufenden Kragen 7 auf, der im eingesetzten Zustand mit der Oberseite der die Masche definierenden Stege 3 in Anlage liegt. Der Grundkörper 6 weist einen mittigen innenliegenden Spreizkanal 8 auf. In den Spreizkanal 8 kann eine Schraube 9 als Spreizelement eingeführt werden kann. Der Spreizkanal 8 erstreckt sich in einen sich in Einbringrichtung des Befestigungselementes 4 an eine mit einem Innengewinde 10 ausgebildete Einführhülse 11 anschließenden Spreizbereich 12, der zwei durch einen Schlitz 13 voneinander getrennte Spreizzungen 14 aufweist. Beim Aufspreizen des Befestigungselement 4 werden die Spreizzungen 14 radial nach außen bewegt. Die Einführhülse 11 kann einen umlaufenden Kragen aufweisen, der sich an einer Oberseite des Grundkörpers abstützt und die Lage der Hülse im Grundkörper definiert, sowie einen Anschlag für das Spreizelement ausbildet. Wenn kein Kragen vorliegt, kann alternativ eine Unterlegscheibe 15 verwendet werden.

Das Befestigungselement 2 kann mittels Spritzgussverfahren hergestellt werden, was besonders kostengünstig ist. Es ist denkbar die Einführhülse 11 in die Spritzgussform einzusetzen oder nachträglich einzuarbeiten. Das Befestigungselement 2 kann sowohl einteilig als auch mehrteilig gefertigt werden. Es ist auch möglich, dass auf eine Einführhülse 11 verzichtet wird und ein Gewinde in den Grundkörper 6 eingearbeitet wird. Wenn das Spreizelement eine Niete ist, kann eine Bohrung vorgesehen sein.

Das Befestigungselement 4 kann insbesondere aus technischem Kunststoff gebildet sein. Für das Befestigungselement sind vor allem folgende Kunststoffe denkbar: Polyethlyen, Polyamid, Polyacetal, Polyvinvylchlorid, Polyoxymethylene (POM). Die Einführhülse 11 ist bevorzugt aus Stahl, Messing oder Edelstahl gebildet.

Das Befestigungselement 4 kann von der Laufseite her auch im bereits montierten Zustand der Gitterroste 1 in eine Masche 2 eingebracht werden und lässt sich dadurch besonders einfach montieren. Dieser Vorgang lässt sich auch bei konischen Maschen, wie dies der Fall bei gegossenen GFK Gitterrosten ist, ohne Nachteile durchführen.

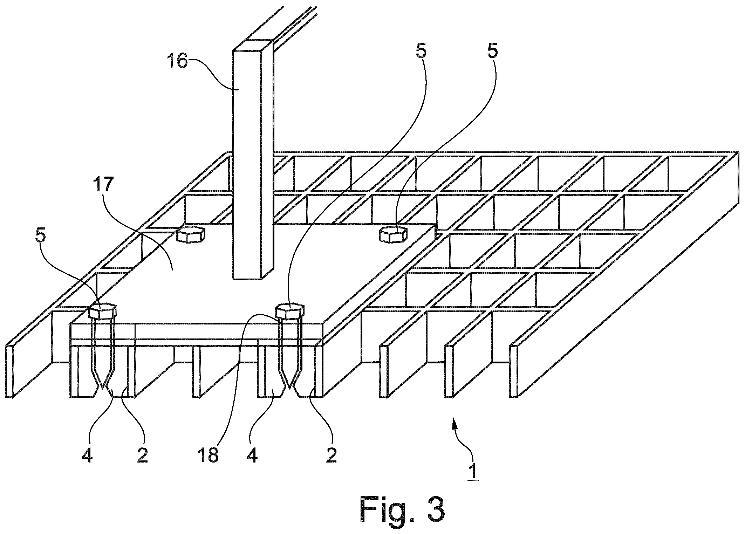

In der Figur 3 ist schematisch ein an einem Gitterrost 1 befestigter Pfosten 16 eines Geländers dargestellt. Der Pfosten 16 des Geländers weist endseitig eine Grundplatte 17 auf, die auf der Laufseite des Gitterrostes 1 aufliegt. Die Grundplatte 17 ist rechteckig ausgebildet und weist in jeder Ecke eine durchsetzende Bohrung 18 auf. In die jeweils unterhalb der Bohrung 18 liegende Masche 2 ist das zuvor beschriebene Befestigungselement 4 eingesetzt. Das Einsetzen erfolgt bevor der Pfosten 16 bzw. das Geländer auf dem Gitterrost 1 platziert wird. Jeweils ein Befestigungsmittel 5 in Form einer Schraube wird durch die Bohrung 18 der Grundplatte 17 geführt und in das Befestigungselement 4 geschraubt. Durch das Einschrauben in das Befestigungselement 4 verklemmt sich dieses in der Masche 2, wie vorstehend beschrieben und eine reibschlüssige Verbindung entsteht. Die Schrauben liegen im vollständig montierten Zustand mit ihren Köpfen an der Oberseite der Grundplatte 17 in Anlage und befestigen somit die Grundplatte 17 an dem Befestigungselement 4 und mittelbar an dem Gitterrost 1 lösbar. Es ist auch denkbar, anstelle von Schrauben andere Befestigungsmittel, wie beispielsweise Nieten, Stifte, Nägel oder dergleichen zu verwenden.

## Patentansprüche

1. Gitterrostanordnung aufweisend wenigstens einen Gitterrost (1) mit Stegen (3), wobei die Stege (3) Maschen (2) begrenzen, und wenigstens ein Befestigungselement (4), **dadurch gekennzeichnet, dass** das wenigstens eine Befestigungselement (4) in eine Masche (2) einsetzbar ist und sich an einer Innenwandung (20) der Masche (2) derart abstützt, dass das wenigstens eine Befestigungselement (4) in der Masche (2) verklemmt und darin reibschlüssig gehalten ist.

2. Gitterrostanordnung nach Anspruch 1, **dadurch gekennzeichnet, dass** das wenigstens eine Befestigungselement (4) einen Grundkörper (6) mit einem Spreizbereich (12) aufweist, sowie ein Spreizelement (5), wobei der Grundkörper (6) im Spreizbereich (12) mittels des Spreizelementes (5) radial nach außen bewegbar ist, derart, dass im montierten Zustand des wenigstens einen Befestigungselementes (4) der Grundkörper (6) im Spreizbereich (12) gegen die Innenwandung (20) drückt und einen Reibschluss herstellt.

3. Gitterrostanordnung nach Anspruch 1 oder 2, **dadurch gekennzeichnet, dass** der Grundkörper (6) im Spreizbereich (12) wenigstens zwei Spreizzungen (14) aufweist.

4. Gitterrostanordnung nach einem der vorhergehenden Ansprüche, **dadurch gekennzeichnet, dass** der Grundkörper (6) einen Kragen (7) an der in Einsetzrichtung vorderen Stirnseite aufweist, der im eingesetzten Zustand auf einer Oberseite der die Masche (2) umgebenden Stege (3) aufliegt.

5. Gitterrostanordnung nach einem der vorhergehenden Ansprüche 2 bis 4, **dadurch gekennzeichnet, dass** der Grundkörper (6) einen Einführbereich für das Spreizmittel (5) aufweist, der in Einsetzrichtung vor dem Spreizbereich (12) liegt.

6. Gitterrostanordnung nach Anspruch 5, **dadurch gekennzeichnet, dass** der Einführbereich ein Innengewinde (10) aufweist.

7. Gitterrostanordnung nach Anspruch 5 oder 6, **dadurch gekennzeichnet, dass** der Einführbereich mittels einer ein Innengewinde (10) tragenden Einführhülse (11) gebildet ist.

8. Gitterrostanordnung nach einem der vorhergehenden Ansprüche, **dadurch gekennzeichnet, dass** der Grundkörper (6) des wenigstens einen Befestigungselementes (4) im Spritzgussverfahren gebildet ist.

9. Verfahren zur Verbindung eines Bauelements (16,17) mit einem Gitterrost (1), wobei der Gitterrost (1) Stege (3) aufweist, die Maschen (2) begrenzen, mit folgenden Verfahrensschritten:
- Einsetzen eines Befestigungselementes (4) in eine Masche (2) des Gitterrostes (1),
- Platzieren eines zu befestigenden Bauelementes (16,17) auf dem Gitterrost (1), und
- Befestigen des Bauelementes (16,17) an dem Befestigungselement (4) mittels Befestigungsmittel (5) und dabei
- Einbringen des Befestigungsmittels (5) in das Befestigungselement (4) derart, dass das Befestigungselement (4) innerhalb der Masche (2) verklemmt und eine reibschlüssige Verbindung entsteht.

10. Verwendung eines Befestigungselementes (4) zur Befestigung von Bauelementen (16,17) an einem Gitterrost (1), wobei das Befestigungselement (4) einen Grundkörper (6) und ein Spreizelement (5) aufweist, wobei der Grundkörper (6) einen Spreizbereich (12) hat, der in Zusammenwirkung mit dem Spreizelement (5) dazu ausgelegt ist, eine reibschlüssige Verbindung innerhalb einer Masche (2) eines Gitterrostes (1) herzustellen.
